# EUROPEAN PATENT APPLICATION

(11) **EP 4 510 722 A1**
(43) Date of publication of application: **19.02.2025**
(21) Application number: 22936965.7
(22) Date of filing: 15.04.2022
(51) Int. Cl.: H04W 64/00

(54) **UPLINK POSITIONING REFERENCE SIGNAL CONFIGURATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2022/087190
(87) International publication number: WO 2023/197320

(57) **Abstract**

The present application relates to the field of mobile communications. Disclosed are an uplink positioning reference signal configuration method and apparatus, and a device and a storage medium. The method comprises: sending a request message to a network device and/or a location management function (LMF) network element, wherein the request message is used for requesting the network device and/or the LMF network element to configure an uplink positioning reference signal to a terminal device. By means of a terminal device actively requesting a network device and/or an LMF network element to configure an uplink positioning reference signal, when the terminal device releases a stored uplink positioning reference signal configuration, an uplink positioning reference signal can be instantly configured for the terminal device according to the request of the terminal device, such that a time delay in configuring an uplink positioning reference signal for the terminal device is reduced, thereby reducing a positioning time delay, and improving the flexibility of the configuration of the uplink positioning reference signal.

## Description

### TECHNICAL FILED

This application relates to the field of mobile communications and, in particular, to a method and apparatus for configuring a reference signal, a device and a storage medium.

### BACKGROUND

The 5th Generation Mobile Communication Technology (5G) New Radio (NR) introduces a variety of positioning technologies to realize the positioning of terminals.

For the uplink positioning technology and the uplink and downlink hybrid positioning technology, it is necessary for the network device to configure an uplink positioning reference signal for the terminal so that the terminal sends the uplink positioning reference signal to the network device according to an uplink positioning reference signal configuration to realize the positioning of the terminal.

Further discussion and research is needed on the way to configure uplink positioning reference signals for the terminals.

### SUMMARY

Embodiments of the present application provide a method and apparatus for configuring an uplink positioning reference signal, a device and a storage medium. The described technical solutions are as follows.

According to an aspect of the present application, there is provided a method for configuring an uplink positioning reference signal. The method is performed by a terminal and includes:
sending a request message to a network device and/or a Location Management Function (LMF) network element,
where the request message is used to request the network device and/or the LMF network element to configure an uplink positioning reference signal for the terminal.

According to another aspect of the present application, there is provided a method for configuring an uplink positioning reference signal. The method is performed by a network device and includes:
receiving a request message from a terminal,
where the request message is used to request the network device to configure an uplink positioning reference signal for the terminal.

According to another aspect of the present application, there is provided a method for configuring an uplink positioning reference signal. The method is performed by an LMF network element and includes:
receiving a request message from a terminal,
where the request message is used to request the LMF network element to configure an uplink positioning reference signal for the terminal.

According to another aspect of the present application, there is provided an apparatus for configuring an uplink positioning reference signal, the apparatus including:
a sending module configured to send a request message to a network device and/or an LMF network element,
where the request message is used to request the network device and/or the LMF network element to configure an uplink positioning reference signal for the terminal.

According to another aspect of the present application, there is provided an apparatus for configuring an uplink positioning reference signal, the apparatus including:
receiving a request message from a terminal,
where the request message is used to request a network device to configure an uplink positioning reference signal for the terminal.

According to another aspect of the present application, there is provided an apparatus for configuring an uplink positioning reference signal, the apparatus including:
a receiving module configured to receive a request message from a terminal,
where the request message is used to request an LMF network element to configure an uplink positioning reference signal for the terminal.

According to another aspect of the present application, there is provided a terminal, the terminal including: a processor, a transceiver connected to the processor, and a memory for storing instructions executable by the processor, where the processor is configured to load and execute the instructions to implement the method for configuring the uplink positioning reference signal as described in the above aspects.

According to another aspect of the present application, there is provided a network device, the network device including: a processor, a transceiver connected to the processor, and a memory for storing instructions executable by the processor, where the processor is configured to load and execute the instructions to implement the method for configuring the uplink positioning reference signal as described in the above aspects.

According to another aspect of the present application, there is provided a computer-readable storage medium storing executable instructions which, when loaded and executed by a processor, cause the processor to implement the method for configuring the uplink positioning reference signal as described in the above aspects.

According to another aspect of the present application, there is provided a chip, the chip including a programmable logic circuit and/or program instructions which, when the chip is running on a computer, are configured to implement the method for configuring the uplink positioning reference signal as described in the above aspects.

According to another aspect of the present application, there is provided a computer program product or computer program, the computer program product or computer program including computer instructions stored in a computer-readable storage medium. A processor reads and executes the computer instructions from the computer-readable storage medium, causing the computer device performs the method for configuring the uplink positioning reference signal as described in the above aspects.

The technical solutions provided by the present application include at least the following beneficial effects:
By actively requesting the configuration of the uplink positioning reference signal from the network device and/or the LMF network element by the terminal, it is possible to instantly configure the uplink positioning reference signal for the terminal according to the terminal's request when the terminal releases the stored uplink positioning reference signal configuration. This can reduce the delay in configuring the uplink positioning reference signal for the terminal, thereby reducing the positioning delay and improving the flexibility of configuring the uplink positioning reference signal.

### BRIEF DESCRIPTION OF THE DRAWINGS

In order to more clearly illustrate the technical solutions in the embodiments of the present application, the accompanying drawings to be used in the description of the embodiments will be briefly introduced below. It is obvious that the accompanying drawings in the following description are only some of the embodiments of the present application, and other accompanying drawings can be obtained according to these drawings for those of ordinary skill in the art without any creative labor.
FIG. 1 is a schematic diagram of system architecture of a communication system provided by an exemplary embodiment of the present application.
FIG. 2 is a flowchart of a method for configuring an uplink positioning reference signal provided by an exemplary embodiment of the present application.
FIG. 3 is a flowchart of a method for configuring an uplink positioning reference signal provided by an exemplary embodiment of the present application.
FIG. 4 is a flowchart of a method for configuring an uplink positioning reference signal provided by an exemplary embodiment of the present application.
FIG. 5 is a flowchart of a method for configuring an uplink positioning reference signal provided by an exemplary embodiment of the present application.
FIG. 6 is a flowchart of a method for configuring an uplink positioning reference signal provided by an exemplary embodiment of the present application.
FIG. 7 is a flowchart of a method for configuring an uplink positioning reference signal provided by an exemplary embodiment of the present application.
FIG. 8 is a flowchart of a method for configuring an uplink positioning reference signal provided by an exemplary embodiment of the present application.
FIG. 9 is a flowchart of a method for configuring an uplink positioning reference signal provided by an exemplary embodiment of the present application.
FIG. 10 is a flowchart of a method for configuring an uplink positioning reference signal provided by an exemplary embodiment of the present application.
FIG. 11 is a flowchart of a method for configuring an uplink positioning reference signal provided by an exemplary embodiment of the present application.
FIG. 12 is a flowchart of a method for configuring an uplink positioning reference signal provided by an exemplary embodiment of the present application.
FIG. 13 is a block diagram of a structure of an apparatus for configuring an uplink positioning reference signal provided by an exemplary embodiment of the present application.
FIG. 14 is a block diagram of a structure of an apparatus for configuring an uplink positioning reference signal provided by an exemplary embodiment of the present application.
FIG. 15 is a block diagram of a structure of an apparatus for configuring an uplink positioning reference signal provided by an exemplary embodiment of the present application.
FIG. 16 is a schematic diagram of a structure of a communication device provided by an exemplary embodiment of the present application.

### DETAILED DESCRIPTION

In order to make the purpose, technical solutions and advantages of the present application clearer, detailed descriptions will be provided below for the embodiments of the present application in conjunction with the accompanying drawings.

Exemplary embodiments will be described herein in detail, examples of which are represented in the accompanying drawings. When the following description relates to the accompanying drawings, the same numerals in the different accompanying drawings indicate the same or similar elements unless otherwise indicated. The embodiments described in the following exemplary embodiments do not represent all the embodiments consistent with the present application. Rather, they are only examples of apparatuses and methods consistent with some aspects of this application as detailed in the appended claims.

The terms used in this disclosure are used solely for the purpose of describing particular embodiments and are not intended to limit the present disclosure. The singular forms of "a/an," "said," and "this" used in this disclosure and the appended claims are also intended to encompass the plural form, unless the context clearly indicates otherwise. It should also be understood that the term "and/or" as used herein refers to and encompasses any or all possible combinations of one or more of the associated listed items.

It should be understood that although the terms "first," "second," "third," etc. may be employed in the present disclosure to describe various types of information, such information should not be limited by these terms. These terms are only used to distinguish the same type of information from one another. For example, without departing from the scope of the present disclosure, first information may also be referred to as second information, and similarly, second information may be referred to as first information. Depending on the context, the phrase "if" as used herein may be interpreted as "at the time of... " or "when... " or "in response to determining...".

The 5th Generation Mobile Communication Technology (5G) New Radio (NR) introduces a variety of positioning technologies to realize the positioning of terminals. For the uplink positioning technology and the uplink and downlink hybrid positioning technology, it is necessary to use an uplink positioning reference signal sent from the terminal to the network device to realize the positioning of the terminal. The uplink positioning reference signal is a Sounding Reference Signal (SRS). The network device needs to first configure the uplink positioning reference signal for the terminal before the uplink positioning reference signal sent by the terminal can be received by the network device. The network device can realize configuring the uplink positioning reference signal for the terminal by sending an uplink positioning reference signal configuration to the terminal. The uplink positioning reference signal configuration includes time-frequency resources used by the terminal when sending the uplink positioning reference signal.

In the NR of Release 16 (R16), the following method for positioning the terminal based on SRS has been introduced:
- Enhanced Cell Identity Document (ID) Positioning Method;
- Uplink Time Difference of Arrival Positioning Method;
- Multi-Cell Round Trip Time Positioning Method; and
- Uplink Angle of Arrival Positioning Method.

In the above methods, an uplink positioning reference signal needs to be used. In R16, when positioning the terminal using the above methods, the terminal needs to be in a Radio Resource Control (RRC) connected state, which may lead to a high power consumption overhead of the terminal.

In the NR of R17, the positioning of the terminal in an RRC inactive state is supported. The terminal, while in the RRC inactive state, can send an uplink positioning reference signal to the network device. Specifically, the network device will configure the uplink positioning reference signal for the terminal via an RRC release message when it transitions the terminal from the RRC connected state to the RRC inactive state. The detailed configuration corresponding to the uplink positioning reference signal is included in 'srs-PosRRC-InactiveConfig' of the RRC release message, and the terminal needs to release the uplink positioning reference signal configured for it by the network device if the terminal has performed cell reselection, i.e., to release the uplink positioning reference signal configuration. For example, after performing cell reselection, the terminal will delete the uplink positioning reference signal configuration stored locally.

In the current NR, the process of the network configuring the uplink positioning reference signal for the terminal is as follows: a Location Management Function (LMF) network element sends a request message to a base station through a New Radio Positioning Protocol A (NRPPa) message to request the base station to configure the uplink positioning reference signal for the terminal. The base station will determine an uplink positioning reference signal configuration and send the determined uplink positioning reference signal configuration to the terminal via an RRC message, thereby realizing the configuration of the uplink positioning reference signal for the terminal. In addition, the base station will also send the uplink positioning reference signal configuration, which is sent to the terminal, to the LMF network element.

When cell reselection occurs at a terminal in an RRC inactive state, the uplink positioning reference signal configured by the base station for the terminal will be released, so it is necessary to reconfigure the uplink positioning reference signal for the terminal. Currently, the configuration of the uplink positioning reference signal for the terminal is realized by the above scheme, that is, the LMF network element requests the base station to configure the uplink positioning reference signal for the terminal. In this scheme, the LMF network element does not know that the terminal has released the uplink positioning reference signal configuration due to the occurrence of cell reselection, and thus the LMF network element cannot instantly request the base station to configure the uplink positioning reference signal for the terminal again after the terminal releases the stored uplink positioning reference signal configuration. Therefore, the delay in configuring the uplink positioning reference signal for the terminal will be increased, thereby increasing the positioning delay.

The method provided by embodiments of the present application, by having the terminal actively request the network device and/or the LMF network element to configure an uplink positioning reference signal, is able to realize that when the terminal releases the stored uplink positioning reference signal configuration, the uplink positioning reference signal is instantaneously configured for the terminal according to the request of the terminal, thereby being able to reduce the delay in configuring the uplink positioning reference signal for the terminal, which in turn reduces the positioning delay and improves the flexibility of configuring the uplink positioning reference signal.

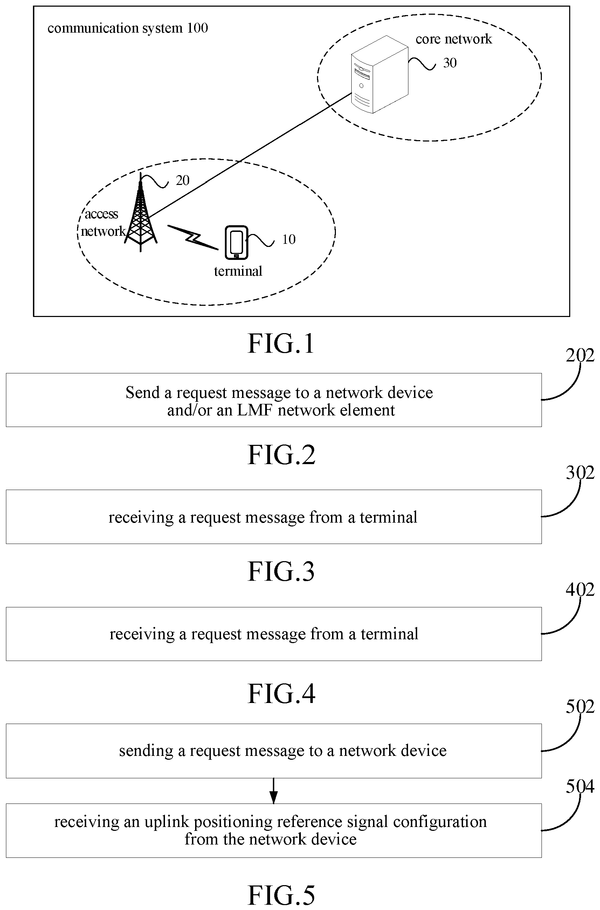

FIG. 1 illustrates a schematic diagram of system architecture of a communication system provided by an embodiment of the present application. The system architecture may include a terminal 10, an access network device 20, and a core network device 30.

The terminal 10 may refer to a User Equipment (UE), an access terminal device, a subscriber unit, a subscriber station, a mobile site, a mobile station, a remote station, a remote terminal device, a mobile device, a wireless communication device, a user agent, or a subscriber device. Optionally, the terminal may also be a cellular telephone, a cordless telephone, a Session Initiation Protocol (SIP) telephone, a Wireless Local Loop (WLL) station, a Personal Digital Assistant (PDA), a handheld device with wireless communication functions, a computing device or other processing device connected to a wireless modem, an in-vehicle device, a wearable device, a terminal device in a 5th Generation System (5GS) or in a future evolved Public Land Mobile Network (PLMN), etc., which is not limited by the embodiments of the present application. For convenience of description, the devices mentioned above are collectively referred to as terminals. There are usually multiple terminals 10, and one or more terminals 10 can be distributed in a cell managed by each access network device 20.

The access network device 20 is a device deployed in an access network and configured to provide wireless communication functions for the terminal 10. The access network device 20 may include various forms of macro base stations, micro base stations, relay stations, access points, and the like. In systems using different wireless access technologies, the name of the device having the function of an access network device may be different. For example, in a 5G NR system, it is called a gNodeB or a gNB. The name of the "access network device" may change as the communication technology evolves. For convenience of description, in the embodiments of the present application, the above-described devices that provide wireless communication functions for the terminal 10 are collectively referred to as access network devices. Optionally, through the access network device 20, a communication relationship may be established between the terminal 10 and the core network device 30. Exemplarily, in an LTE system, the access network device 20 may be an Evolved Universal Terrestrial Radio Access Network (EUTRAN) or one or more eNodeBs the EUTRAN; in a 5G NR system, the access network device 20 may be a RAN or one or more gNBs in the RAN.

The functions of the core network device 30 are mainly to provide user connectivity, manage users, and complete bearer for services, and serve as an interface from the bearer network to the external network. For example, the core network device in the 5G NR system may include an Access and Mobility Management Function (AMF) entity, a User Plane Function (UPF) entity, a Session Management Function (SMF) entity, and a Location Management Function (LMF) entity, etc. The access network device 20 and the core network device 30 may be collectively referred to as network devices. In the embodiments of the present application, the core network device 30 is illustrated as an example of an LMF network element.

In one example, the access network device 20 and the core network device 30 communicate with each other through a certain air interface technology, such as an NG interface in a 5G NR system. The access network device 20 and the terminal 10 communicate with each other through a certain air interface technology, such as a Uu interface.

FIG. 2 illustrates a flowchart of a method for configuring an uplink positioning reference signal provided by an embodiment of the present application. The method can be applied in the terminal shown in FIG. 1. The method includes the following step.

**Step 202,** sending a request message to a network device and/or an LMF network element.

The request message is used to request the network device and/or the LMF network element to configure an uplink positioning reference signal for the terminal. Exemplarily, configuring the uplink positioning reference signal for the terminal means sending to the terminal an uplink positioning reference signal configuration which is used for the terminal to send the uplink positioning reference signal. For example, the uplink positioning reference signal configuration includes time-frequency resources to be used by the terminal for sending the uplink positioning reference signal. Optionally, the request message also carries a reason for the terminal to request the uplink positioning reference signal.

Optionally, the terminal will send the above-described request message to the network device and/or the LMF network element if at least one of the following conditions is satisfied:
- An uplink positioning reference signal stored by the terminal has become invalid;
- The uplink positioning reference signal stored by the terminal has been activated; or
- The uplink positioning reference signal stored by the terminal is a periodic uplink positioning reference signal.

Exemplarily, the above conditions include at least one of the following conditions:
- The uplink positioning reference signal stored by the terminal has become invalid;
- The uplink positioning reference signal stored by the terminal has become invalid, and the uplink positioning reference signal stored by the terminal has been activated; or
- The uplink positioning reference signal stored by the terminal has become invalid, and the uplink positioning reference signal stored by the terminal is a periodic uplink positioning reference signal.

Here, the uplink positioning reference signal stored by the terminal has become invalid, which means that, currently, the uplink positioning reference that has been configured for the terminal is invalid. The uplink positioning reference signal stored by the terminal has become invalid, which can be regarded as the uplink positioning reference signal configuration stored by the terminal has become invalid, e.g., the terminal releases its stored uplink positioning reference signal configuration. Exemplarily, cell reselection has occurred at the terminal, causing the terminal to release the stored uplink positioning reference signal configuration. Optionally, the terminal releasing the stored uplink positioning reference signal configuration means that the terminal deletes the stored uplink positioning reference signal configuration from the local storage.

In the case where the terminal sends the request message to the network device, the network device will respond to the request message, determine an uplink positioning reference signal configuration for the terminal and send it to the terminal, thereby realizing the configuration of the uplink positioning reference signal for the terminal. Optionally, the network device will also send its determined uplink positioning reference signal configuration to the LMF network element. The network device belongs to a serving cell of the terminal.

In the case where the terminal sends the request message to the LMF network element, the LMF network element will respond to the request message and request the network device to configure the uplink positioning reference signal for the terminal. The network device will respond to the request from the LMF network element, determine the uplink positioning reference signal configuration for the terminal, and send it to the LMF network element, after which the LMF network element will send the uplink positioning reference signal configuration determined by the network device to the terminal, thereby realizing the configuration of the uplink positioning reference signal for the terminal. Optionally, in this case, the network device can also respond to the request from the LMF network element, determine the uplink positioning reference signal configuration for the terminal and send it directly to the terminal. The network device will also send the determined uplink positioning reference signal configuration to the LMF network element. Optionally, the network device described above belongs to a serving cell of the terminal.

In summary, the method provided in this embodiment, by having the terminal actively request the network device and/or the LMF network element to configure the uplink positioning reference signal, is able to realize that when the terminal releases the stored uplink positioning reference signal configuration, the uplink positioning reference signal is instantaneously configured for the terminal according to the request of the terminal, thereby being able to reduce the delay in configuring the uplink positioning reference signal for the terminal, which in turn reduces the positioning delay and improves the flexibility of configuring the uplink positioning reference signal.

FIG. 3 illustrates a flowchart of a method for configuring an uplink positioning reference signal provided by an embodiment of the present application. The method can be applied in the access network device shown in FIG. 1. The method includes the following step.

**Step 302,** receiving a request message from a terminal.

The request message is used to request the network device to configure an uplink positioning reference signal for the terminal. Exemplarily, configuring the uplink positioning reference signal for the terminal means sending to the terminal an uplink positioning reference signal configuration which is used for the terminal to send the uplink positioning reference signal. For example, the uplink positioning reference signal configuration includes time-frequency resources to be used by the terminal for sending the uplink positioning reference signal. Optionally, the request message also carries a reason for the terminal to request the uplink positioning reference signal.

In the case where the terminal sends the request message to the network device, the network device will respond to the request message, determine an uplink positioning reference signal configuration for the terminal and send it to the terminal, thereby realizing the configuration of the uplink positioning reference signal for the terminal. Optionally, the network device will also send its determined uplink positioning reference signal configuration to the LMF network element. The network device belongs to a serving cell of the terminal.

In summary, the method provided in this embodiment, by having the terminal actively request the network device to configure the uplink positioning reference signal, is able to realize that when the terminal releases the stored uplink positioning reference signal configuration, the uplink positioning reference signal is instantaneously configured for the terminal according to the request of the terminal, thereby being able to reduce the delay in configuring the uplink positioning reference signal for the terminal, which in turn reduces the positioning delay and improves the flexibility of configuring the uplink positioning reference signal.

FIG. 4 illustrates a flowchart of a method for configuring an uplink positioning reference signal provided by an embodiment of the present application. The method can be applied in the core network device shown in FIG. 1. The method includes the following step.

**Step 402,** receiving a request message from a terminal.

The request message is used to request the LMF network element to configure an uplink positioning reference signal for the terminal. Exemplarily, configuring the uplink positioning reference signal for the terminal means sending to the terminal an uplink positioning reference signal configuration which is used for the terminal to send the uplink positioning reference signal. For example, the uplink positioning reference signal configuration includes time-frequency resources to be used by the terminal for sending the uplink positioning reference signal. Optionally, the request message also carries a reason for the terminal to request the uplink positioning reference signal.

In the case where the terminal sends the request message to the LMF network element, the LMF network element will respond to the request message and request the network device to configure the uplink positioning reference signal for the terminal. The network device will respond to the request from the LMF network element, determine an uplink positioning reference signal configuration for the terminal, and send it to the LMF network element, after which the LMF network element will send the uplink positioning reference signal configuration determined by the network device to the terminal, thereby realizing the configuration of the uplink positioning reference signal for the terminal. Optionally, in this case, the network device can also respond to the request from the LMF network element, determine the uplink positioning reference signal configuration for the terminal and send it directly to the terminal. The network device will also send the determined uplink positioning reference signal configuration to the LMF network element. Optionally, the network device described above belongs to a serving cell of the terminal.

In summary, the method provided in this embodiment, by having the terminal actively request the LMF network element to configure the uplink positioning reference signal, is able to realize that when the terminal releases the stored uplink positioning reference signal configuration, the uplink positioning reference signal is instantaneously configured for the terminal according to the request of the terminal, thereby being able to reduce the delay in configuring the uplink positioning reference signal for the terminal, which in turn reduces the positioning delay and improves the flexibility of configuring the uplink positioning reference signal.

FIG. 5 illustrates a flowchart of a method for configuring an uplink positioning reference signal provided by an embodiment of the present application. The method can be applied in the terminal shown in FIG. 1. The method includes the following steps.

**Step 502,** sending a request message to a network device.

The request message is used to request the network device to configure an uplink positioning reference signal for the terminal. Exemplarily, configuring the uplink positioning reference signal for the terminal means sending to the terminal an uplink positioning reference signal configuration which is used for the terminal to send the uplink positioning reference signal. For example, the uplink positioning reference signal configuration includes time-frequency resources to be used by the terminal for sending the uplink positioning reference signal.

Optionally, the request message also carries a reason for the terminal to request the uplink positioning reference signal. The reason for the terminal to request the uplink positioning reference signal includes at least one of the following:
- An uplink positioning reference signal stored by the terminal has become invalid; or
- Cell reselection occurs at the terminal.

Optionally, the terminal will send the above-described request message to the network device if at least one of the following conditions is satisfied:
- The uplink positioning reference signal stored by the terminal has become invalid;
- The uplink positioning reference signal stored by the terminal has been activated; or
- The uplink positioning reference signal stored by the terminal is a periodic uplink positioning reference signal.

Exemplarily, the above conditions include at least one of the following conditions:
- The uplink positioning reference signal stored by the terminal has become invalid;
- The uplink positioning reference signal stored by the terminal has become invalid, and the uplink positioning reference signal stored by the terminal has been activated; or
- The uplink positioning reference signal stored by the terminal has become invalid, and the uplink positioning reference signal stored by the terminal is a periodic uplink positioning reference signal.

Here, the uplink positioning reference signal stored by the terminal has become invalid, which means that, currently, the uplink positioning reference that has been configured for the terminal is invalid. The uplink positioning reference signal stored by the terminal has become invalid, which can be regarded as the uplink positioning reference signal configuration stored by the terminal has become invalid, e.g., the terminal releases its stored uplink positioning reference signal configuration. Exemplarily, cell reselection has occurred at the terminal, causing the terminal to release the stored uplink positioning reference signal configuration. Optionally, the terminal releasing the stored uplink positioning reference signal configuration means that the terminal deletes the stored uplink positioning reference signal configuration from the local storage. Optionally, the uplink positioning reference signal stored by the terminal, that has been activated, is a semi-persistent uplink positioning reference signal, or a non-periodic uplink positioning reference signal.

Optionally, the request message sent by the terminal to the network device is carried in an RRC resume request message.

**Step 504:** receiving an uplink positioning reference signal configuration from the network device.

The uplink positioning reference signal configuration is determined by the network device in response to the request message from the terminal. In the case where the terminal sends a request message to the network device, the network device will respond to the request message, and determine an uplink positioning reference signal configuration for the terminal and send it to the terminal, thereby realizing the configuration of the uplink positioning reference signal for the terminal. Optionally, the network device will also send the determined uplink positioning reference signal configuration to the LMF network element. The network device belongs to a serving cell of the terminal.

Optionally, the uplink positioning reference signal configuration sent by the network device to the terminal is carried in an RRC message. The RRC message includes at least one of: an RRC release message, an RRC reconfiguration message, or an RRC setup message. The uplink positioning reference signal configuration sent by the network device to the LMF network element is carried in an NRPPa message. The NRPPa message includes at least one of a terminal-associated NRPPa (UE association NRPPa) message and a non-terminal-associated NRPPa (non-UE association NRPPa) message.

In summary, the method provided in this embodiment, by having the terminal actively request the network device to configure the uplink positioning reference signal, is able to realize that when the terminal releases the stored uplink positioning reference signal configuration, the uplink positioning reference signal is instantaneously configured for the terminal according to the request of the terminal, thereby being able to reduce the delay in configuring the uplink positioning reference signal for the terminal, which in turn reduces the positioning delay and improves the flexibility of configuring the uplink positioning reference signal.

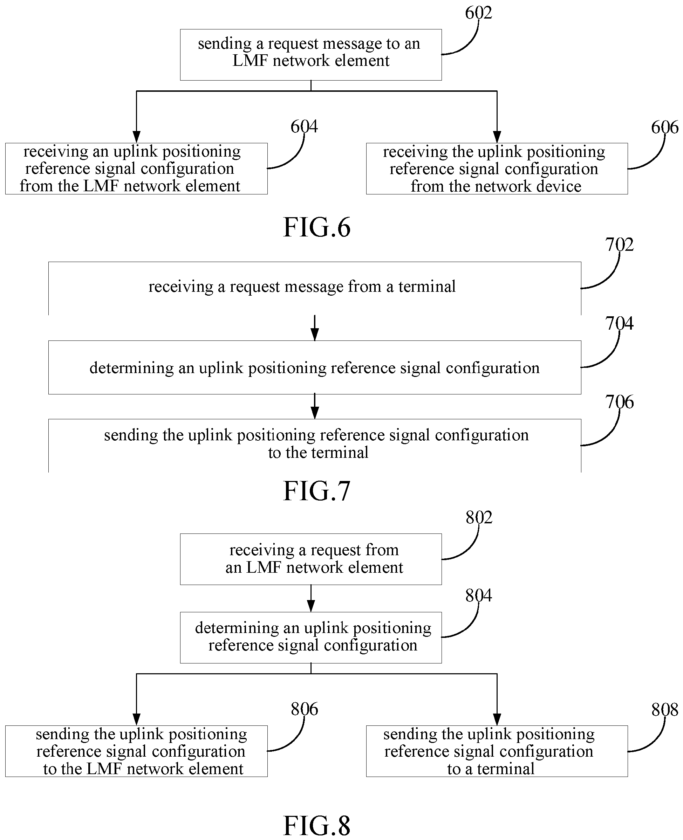

FIG. 6 illustrates a flowchart of a method for configuring an uplink positioning reference signal provided by an embodiment of the present application. The method can be applied in the terminal shown in FIG. 1. The method includes the following steps.

**Step 602,** sending a request message to an LMF network element.

The request message is used to request the network device to configure an uplink positioning reference signal for the terminal. Exemplarily, configuring the uplink positioning reference signal for the terminal means sending to the terminal an uplink positioning reference signal configuration which is used for the terminal to send the uplink positioning reference signal. For example, the uplink positioning reference signal configuration includes time-frequency resources to be used by the terminal for sending the uplink positioning reference signal.

Optionally, the request message further carries a reason for the terminal to request the uplink positioning reference signal. The reason for the terminal to request the uplink positioning reference signal includes at least one of the following:
- An uplink positioning reference signal stored by the terminal has become invalid; or
- Cell reselection occurs at the terminal.

Optionally, the terminal will send the above-described request message to the LMF network element if at least one of the following conditions is satisfied:
- The uplink positioning reference signal stored by the terminal has become invalid;
- The uplink positioning reference signal stored by the terminal has been activated; or
- The uplink positioning reference signal stored by the terminal is a periodic uplink positioning reference signal.

Exemplarily, the above conditions include at least one of the following conditions:
- The uplink positioning reference signal stored by the terminal has become invalid;
- The uplink positioning reference signal stored by the terminal has become invalid, and the uplink positioning reference signal stored by the terminal has been activated; or
- The uplink positioning reference signal stored by the terminal has become invalid, and the uplink positioning reference signal stored by the terminal is a periodic uplink positioning reference signal.

Here, the uplink positioning reference signal stored by the terminal has become invalid, which means that, currently, the uplink positioning reference that has been configured for the terminal is invalid. The uplink positioning reference signal stored by the terminal has become invalid, which can be regarded as the uplink positioning reference signal configuration stored by the terminal has become invalid, e.g., the terminal releases its stored uplink positioning reference signal configuration. Exemplarily, cell reselection has occurred at the terminal, causing the terminal to release the stored uplink positioning reference signal configuration. Optionally, the terminal releasing the stored uplink positioning reference signal configuration means that the terminal deletes the stored uplink positioning reference signal configuration from the local storage. Optionally, the uplink positioning reference signal stored by the terminal, that has been activated, is a semi-persistent uplink positioning reference signal, or a non-periodic uplink positioning reference signal.

Optionally, the terminal sends the request message to the LMF network element in at least two ways as follows.

**For the case where the request message is sent to the LMF network element via a network device:**
the terminal sends the request message to the LMF network element via the network device based on an RRC message, such as an RRC resume request message, i.e., the network device transparently transmits the request message sent by the terminal to the LMF network element. In this process, the terminal will send a request message to the network device based on the RRC resume request message. The RRC resume request message carries uplink delivery information (i.e., a UL Information Transfer message), and the uplink delivery information carries the request message. The network device, after receiving the above information sent by the terminal, will send the uplink delivery information to the LMF network element. Optionally, the uplink delivery information refers to an Uplink Non-Access Stratum Transport (i.e., Uplink NAS Transport) message. Optionally, the network device that transparently transmits the request message of the terminal may belong or may not belong to a serving cell of the terminal.

**For the case where the request message is sent directly to the LMF network element via a LTE Positioning Protocol (LPP):**
in the case where the terminal sends the request message directly to the LMF network element, the request message sent by the terminal to the LMF network element is carried in a LPP message.

It should be noted that the terminal can also send the request message to the LMF network element in other ways, and the above implementations are used as examples only and are not to be taken as a limitation of the solutions provided by the embodiments of the present application.

**Step 604,** receiving an uplink positioning reference signal configuration from the LMF network element.

In the case where the terminal sends the request message to the LMF network element, the LMF network element will respond to the request message and request the network device to configure the uplink positioning reference signal for the terminal. The network device will respond to the request of the LMF network element, determine an uplink positioning reference signal configuration for the terminal, and send it to the LMF network element, after which the LMF network element will send the uplink positioning reference signal configuration determined by the network device to the terminal, thereby realizing the configuration of the uplink positioning reference signal for the terminal. Optionally, the network device described above belongs to a serving cell of the terminal.

Optionally, the uplink positioning reference signal configuration sent by the LMF network element to the terminal is carried in the LPP message. The LMF network element requests the network device to configure the uplink positioning reference signal to the terminal via the NRPPa message. The network device sends its determined uplink positioning reference signal configuration to the LMF network element via the NRPPa message. The NRPPa message includes at least one of a UE association NRPPa message or a non-UE association NRPPa message.

**Step 606,** receiving the uplink positioning reference signal configuration from the network device.

In the case where the terminal sends the request message to the LMF network element, the LMF network element will respond to the request message and request the network device to configure the uplink positioning reference signal for the terminal. The network device will respond to the request of the LMF network element, determine the uplink positioning reference signal configuration for the terminal, and send it directly to the terminal, thereby realizing the configuration of the uplink positioning reference signal for the terminal. Optionally, the network device will also send its determined uplink positioning reference signal configuration to the LMF network element. Optionally, the network device described above belongs to a serving cell of the terminal.

Optionally, the LMF network element requests the network device to configure the uplink positioning reference signal for the terminal via the NRPPa message. The network device sends its determined uplink positioning reference signal configuration to the LMF network element via the NRPPa message. The NRPPa message includes at least one of a UE association NRPPa message or a non-UE association NRPPa message. The uplink positioning reference signal configuration sent by the network device to the terminal is carried in an RRC message. The RRC message includes at least one of an RRC release message, an RRC reconfiguration message, or an RRC setup message.

It should be noted that the above step 604 as well as step 606 are parallel schemes. That is, the terminal, in the case of requesting the LMF network element to configure the uplink positioning reference signal configuration for it, will receive the uplink positioning reference signal configuration sent to it by the LMF network element, or receive the uplink positioning reference signal configuration sent to it by the network device.

In summary, the method provided in this embodiment, by having the terminal actively request the LMF network element to configure the uplink positioning reference signal, is able to realize that when the terminal releases the stored uplink positioning reference signal configuration, the uplink positioning reference signal is instantaneously configured for the terminal according to the request of the terminal, thereby being able to reduce the delay in configuring the uplink positioning reference signal for the terminal, which in turn reduces the positioning delay and improves the flexibility of configuring the uplink positioning reference signal.

FIG. 7 illustrates a flowchart of a method for configuring an uplink positioning reference signal provided by an embodiment of the present application. The method can be applied in the access network device shown in FIG. 1. The method includes the following steps.

**Step 702,** receiving a request message from a terminal.

The request message is used to request the network device to configure an uplink positioning reference signal for the terminal. Exemplarily, configuring the uplink positioning reference signal for the terminal means sending to the terminal an uplink positioning reference signal configuration which is used for the terminal to send the uplink positioning reference signal. For example, the uplink positioning reference signal configuration includes time-frequency resources to be used by the terminal for sending the uplink positioning reference signal.

Optionally, the request message sent by the terminal to the network device is carried in an RRC resume request message.

**Step 704,** determining an uplink positioning reference signal configuration.

The uplink positioning reference signal configuration is determined by the network device in response to the request message from the terminal. In the case where the terminal sends the request message to the network device, the network device will respond to the request message and determine the uplink positioning reference signal configuration for the terminal. Optionally, the network device belongs to a serving cell of the terminal.

**Step 706,** sending the uplink positioning reference signal configuration to the terminal.

After the network device determines the uplink positioning reference signal configuration for the terminal, it will send its determined uplink positioning reference signal configuration to the terminal, thereby realizing the configuration of the uplink positioning reference signal for the terminal. Optionally, the network device will also send its determined uplink positioning reference signal configuration to the LMF network element.

Optionally, the uplink positioning reference signal configuration sent by the network device to the terminal is carried in an RRC message. The RRC message includes at least one of an RRC release message, an RRC reconfiguration message, or an RRC setup message. The uplink positioning reference signal configuration sent by the network device to the LMF network element is carried in an NRPPa message. The NRPPa message includes at least one of a UE association NRPPa message or a non-UE association NRPPa message.

In summary, the method provided in this embodiment, by having the terminal actively request the network device to configure the uplink positioning reference signal, is able to realize that when the terminal releases the stored uplink positioning reference signal configuration, the uplink positioning reference signal is instantaneously configured for the terminal according to the request of the terminal, thereby being able to reduce the delay in configuring the uplink positioning reference signal for the terminal, which in turn reduces the positioning delay and improves the flexibility of configuring the uplink positioning reference signal.

FIG. 8 illustrates a flowchart of a method for configuring an uplink positioning reference signal provided by an embodiment of the present application. The method can be applied in the access network device shown in FIG. 1. The method includes the following steps.

**Step 802,** receiving a request from an LMF network element.

The request is used to request the network device to configure an uplink positioning reference signal for the terminal, which is sent by the LMF network element in the case where it has received a request message from the terminal. The request message is used to request the LMF network element to configure an uplink positioning reference signal for the terminal. Exemplarily, configuring the uplink positioning reference signal for the terminal means sending to the terminal an uplink positioning reference signal configuration which is used for the terminal to send the uplink positioning reference signal. For example, the uplink positioning reference signal configuration includes time-frequency resources to be used by the terminal for sending the uplink positioning reference signal.

Optionally, the LMF network element requests the network device to configure an uplink positioning reference signal for the terminal via an NRPPa message. The NRPPa message includes at least one of a UE association NRPPa message or a non-UE association NRPPa message.

**Step 804,** determining an uplink positioning reference signal configuration.

This uplink positioning reference signal configuration is determined by the network device in response to a request from the LMF network element. In the case where the LMF network element requests the network device to configure the uplink positioning reference signal for the terminal, the network device will respond to the request and determine the uplink positioning reference signal configuration for the terminal. Optionally, the network device belongs to a serving cell of the terminal.

**Step 806,** sending the uplink positioning reference signal configuration to the LMF network element.

After determining the uplink positioning reference signal configuration for the terminal, the network device will send its determined uplink positioning reference signal configuration to the LMF network element, after which the LMF network element will send the uplink positioning reference signal configuration determined by the network device to the terminal, thereby realizing the configuration of the uplink positioning reference signal for the terminal.

Optionally, the network device sends its determined uplink positioning reference signal configuration to the LMF network element via an NRPPa message. The NRPPa message includes at least one of a UE association NRPPa message or a non-UE association NRPPa message. The uplink positioning reference signal configuration sent by the LMF network element to the terminal is carried in a LPP message.

**Step 808,** sending the uplink positioning reference signal configuration to the terminal.

After determining the uplink positioning reference signal configuration for the terminal, the network device will send its determined uplink positioning reference signal configuration directly to the terminal, thereby realizing the configuration of the uplink positioning reference signal for the terminal. Optionally, the network device will also send its determined uplink positioning reference signal configuration to the LMF network element.

Optionally, the uplink positioning reference signal configuration sent by the network device to the terminal is carried in an RRC message. The RRC message includes at least one of an RRC release message, an RRC reconfiguration message, or an RRC setup message. The network device sends its determined uplink positioning reference signal configuration to the LMF network element via an NRPPa message. The NRPPa message includes at least one of a UE association NRPPa message or a non-UE association NRPPa message.

It should be noted that the above step 806 as well as step 808 are parallel schemes. That is, the network device, in the case of configuring an uplink positioning reference signal for the terminal based on a request from the LMF network element, will send its determined uplink positioning reference signal configuration to the LMF network element, and the LMF network element will send the uplink positioning reference signal configuration to the terminal. Alternatively, the network device will send its determined uplink positioning reference signal configuration directly to the terminal.

In summary, the method provided in this embodiment, by having the terminal actively request the LMF network element to configure the uplink positioning reference signal, is able to realize that when the terminal releases the stored uplink positioning reference signal configuration, the uplink positioning reference signal is instantaneously configured for the terminal according to the request of the terminal, thereby being able to reduce the delay in configuring the uplink positioning reference signal for the terminal, which in turn reduces the positioning delay and improves the flexibility of configuring the uplink positioning reference signal.

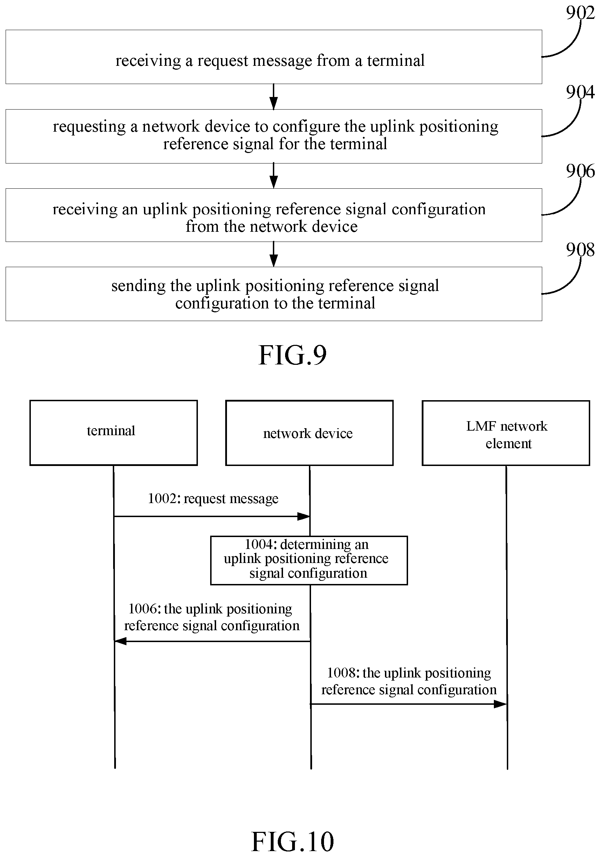

FIG. 9 illustrates a flowchart of a method for configuring an uplink positioning reference signal provided by an embodiment of the present application. The method can be applied in the terminal shown in FIG. 1. The method includes the following steps.

**Step 902,** receiving a request message from a terminal.

The request message is used to request the LMF network element to configure an uplink positioning reference signal for the terminal. Exemplarily, configuring the uplink positioning reference signal for the terminal means sending to the terminal an uplink positioning reference signal configuration which is used for the terminal to send the uplink positioning reference signal. For example, the uplink positioning reference signal configuration includes time-frequency resources to be used by the terminal for sending the uplink positioning reference signal.

Optionally, the request message further carries a reason for the terminal to request the uplink positioning reference signal. The reason for the terminal to request the uplink positioning reference signal includes at least one of the following:
- An uplink positioning reference signal stored by the terminal has become invalid; or
- Cell reselection occurs at the terminal.

Optionally, the LMF network element receives the request message sent by the terminal in at least two ways as follows:

**For the case where the request message from the terminal is received via a network device:**
the request message sent by the terminal can be received by the LMF network element via the network device. The LMF network element receives the request message sent by the terminal based on an RRC resume request message via the network device, i.e. the network device transparently transmits the request message sent by the terminal to the LMF network element. In this process, the LMF network element can receive the request message sent by the network device, which is from the terminal based on the RRC resume request message. The request message from the terminal is sent by the terminal to the network device based on the RRC resume request message. The RRC resume request message carries the UL Information Transfer, and the UL Information Transfer carries the request message. After receiving the above information sent by the terminal, the network device will send the UL Information Transfer to the LMF network element. Optionally, the UL Information Transfer refers to Uplink NAS Transport. Optionally, the network device that transparently transmits the request message from the terminal may belong or may not belong to a serving cell of the terminal.

**For the case where the request message from the terminal is received directly via the LPP:**
the request message sent by the terminal can be received directly by the LMF network element. In this case, the request message sent by the terminal to the LMF network element is carried in a LPP message.

It should be noted that the terminal can also send the request message to the LMF network element in other ways, and the above implementations are used as examples only and are not to be taken as a limitation of the solutions provided by the embodiments of the present application.

**Step 904,** requesting a network device to configure the uplink positioning reference signal for the terminal.

In the case where the terminal sends the request message to the LMF network element, the LMF network element will respond to the request message and request the network device to configure the uplink positioning reference signal for the terminal. Optionally, the network device belongs to a serving cell of the terminal.

Optionally, the LMF network element requests the network device to configure the uplink positioning reference signal for the terminal via an NRPPa message. The NRPPa message includes at least one of a UE association NRPPa message or a non-UE association NRPPa message.

**Step 906,** receiving an uplink positioning reference signal configuration from the network device.

This uplink positioning reference signal configuration is determined by the network device in response to a request from the LMF network element. In the case where the LMF network element requests the network device to configure the uplink positioning reference signal for the terminal, the network device will respond to the request and determine the uplink positioning reference signal configuration for the terminal.

Optionally, the network device sends its determined uplink positioning reference signal configuration to the LMF network element via an NRPPa message. The NRPPa message includes at least one of a UE association NRPPa message or a non-UE association NRPPa message. The uplink positioning reference signal configuration sent by the LMF network element to the terminal is carried in the LPP message.

**Step 908,** sending the uplink positioning reference signal configuration to the terminal.

After receiving the uplink positioning reference signal configuration determined by the network device, the LMF network element will send the uplink positioning reference signal configuration determined by the network device to the terminal, thereby realizing the configuration of the uplink positioning reference signal for the terminal. Optionally, the uplink positioning reference signal configuration sent by the LMF network element to the terminal is carried in a LPP message.

Optionally, after receiving the request from the LMF network element and determining the uplink positioning reference signal configuration for the terminal, the network device as described above can also send the determined uplink positioning reference signal configuration directly to the terminal, thereby realizing the configuration of the uplink positioning reference signal for the terminal. Optionally, in this case, the network device will also send its determined uplink positioning reference signal configuration to the LMF network element.

Optionally, the uplink positioning reference signal configuration sent by the network device to the terminal is carried in an RRC message. The RRC message includes at least one of an RRC release message, an RRC reconfiguration message, or an RRC setup message.

Optionally, in the case where the terminal requests the network device to configure an uplink positioning reference signal for it, the LMF network element will receive an uplink positioning reference signal configuration sent by the network device. This uplink positioning reference signal configuration is determined by the network device in response to the request message sent by the terminal.

In summary, the method provided in this embodiment, by having the terminal actively request the LMF network element to configure the uplink positioning reference signal, is able to realize that when the terminal releases the stored uplink positioning reference signal configuration, the uplink positioning reference signal is instantaneously configured for the terminal according to the request of the terminal, thereby being able to reduce the delay in configuring the uplink positioning reference signal for the terminal, which in turn reduces the positioning delay and improves the flexibility of configuring the uplink positioning reference signal.

Embodiments of the present application provide methods that enable configuration of an uplink positioning reference signal for a terminal by the terminal requesting the configuration of the uplink positioning reference signal for the terminal from a network device and/or an LMF network element. In the case where the terminal requests the LMF network element to configure an uplink positioning reference signal for it, the uplink positioning reference signal configuration is sent by the LMF network element to the terminal, or the uplink positioning reference signal configuration is sent by the network device to the terminal. The above solutions are described below by means of three embodiments.

**For the case where the terminal requests the network device to configure an uplink positioning reference signal:**
FIG. 10 illustrates a flowchart of a method for configuring an uplink positioning reference signal provided by an embodiment of the present application. The method can be applied in the system shown in FIG. 1. The method includes the following steps.

**Step 1002,** a terminal sends a request message to a network device.

The request message is used to request the network device to configure an uplink positioning reference signal for the terminal. Optionally, the request message also carries a reason for the terminal to request the uplink positioning reference signal. The reason for the terminal to request the uplink positioning reference signal includes at least one of the following:
- An uplink positioning reference signal stored by the terminal has become invalid; or
- Cell reselection occurs at the terminal.

Optionally, the terminal will send the above-described request message to the network device if at least one of the following conditions is satisfied:
- The uplink positioning reference signal stored by the terminal has become invalid;
- The uplink positioning reference signal stored by the terminal has been activated; or
- The uplink positioning reference signal stored by the terminal is a periodic uplink positioning reference signal.

Exemplarily, the above conditions include at least one of the following conditions:
- The uplink positioning reference signal stored by the terminal has become invalid;
- The uplink positioning reference signal stored by the terminal has become invalid, and the uplink positioning reference signal stored by the terminal has been activated; or
- The uplink positioning reference signal stored by the terminal has become invalid, and the uplink positioning reference signal stored by the terminal is a periodic uplink positioning reference signal.

Optionally, the request message sent by the terminal to the network device is carried in an RRC resume request message.

**Step 1004,** the network device determines an uplink positioning reference signal configuration.

The uplink positioning reference signal configuration is determined by the network device in response to the request message from the terminal. In the case where the terminal sends a request message to the network device, the network device will respond to the request message, and determine the uplink positioning reference signal configuration for the terminal. Optionally, the network device belongs to a serving cell of the terminal.

**Step 1006,** the network device sends the uplink positioning reference signal configuration to the terminal.

After the network device determines the uplink positioning reference signal configuration for the terminal, it will send its determined uplink positioning reference signal configuration to the terminal, thereby realizing the configuration of the uplink positioning reference signal for the terminal. Optionally, the network device will also send its determined uplink positioning reference signal configuration to the LMF network element.

Optionally, the uplink positioning reference signal configuration sent by the network device to the terminal is carried in an RRC message. The RRC message includes at least one of an RRC release message, an RRC reconfiguration message, or an RRC setup message. The uplink positioning reference signal configuration sent by the network device to the LMF network element is carried in an NRPPa message. The NRPPa message includes at least one of a UE association NRPPa message or a non-UE association NRPPa message.

Step 1008, the network device sends the uplink positioning reference signal configuration to the LMF network element.

After determining the uplink positioning reference signal configuration for the terminal, the network device will also send its determined uplink positioning reference signal configuration to the LMF network element, and the LMF network element is able to be informed of the uplink positioning reference signal configured for the terminal based on the uplink positioning reference signal configuration sent by the network device.

In summary, the method provided in this embodiment, by having the terminal actively request the network device to configure the uplink positioning reference signal, is able to realize that when the terminal releases the stored uplink positioning reference signal configuration, the uplink positioning reference signal is instantaneously configured for the terminal according to the request of the terminal, thereby being able to reduce the delay in configuring the uplink positioning reference signal for the terminal, which in turn reduces the positioning delay and improves the flexibility of configuring the uplink positioning reference signal.

**For the case where the terminal requests the LMF network element to configure an uplink positioning reference signal and the LMF network element sends an uplink positioning reference signal configuration to the terminal:**

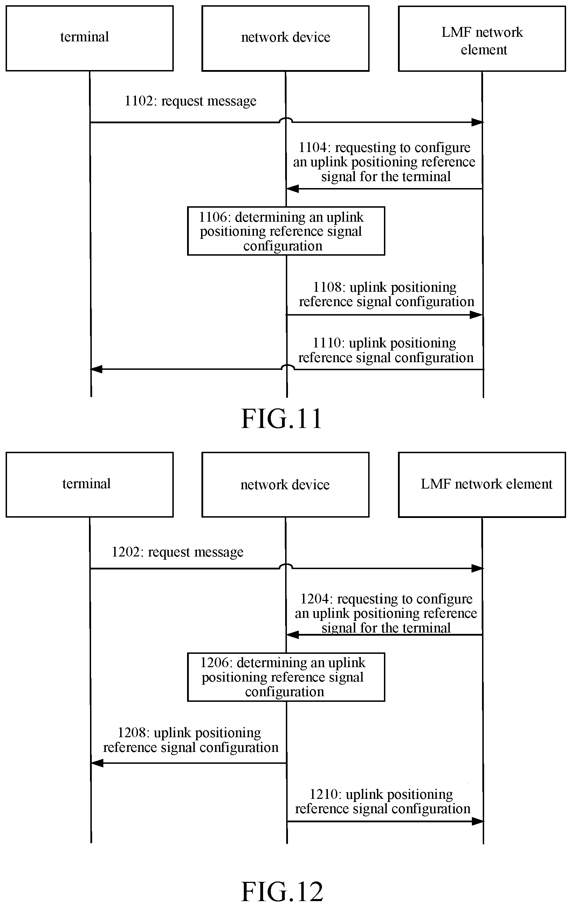

FIG. 11 illustrates a flowchart of a method for configuring an uplink positioning reference signal provided by an embodiment of the present application. The method can be applied in the system shown in FIG. 1. The method includes the following steps.

**Step 1102,** a terminal sends a request message to an LMF network element.

The request message is used to request the LMF network element to configure an uplink positioning reference signal for the terminal. Optionally, the request message also carries a reason for the terminal to request the uplink positioning reference signal. The reason for the terminal to request the uplink positioning reference signal includes at least one of the following:
- An uplink positioning reference signal stored by the terminal has become invalid; or
- Cell reselection occurs at the terminal.

Optionally, the terminal will send the above-described request message to the LMF network element if at least one of the following conditions is satisfied:
- The uplink positioning reference signal stored by the terminal has become invalid;
- The uplink positioning reference signal stored by the terminal has been activated; or
- The uplink positioning reference signal stored by the terminal is a periodic uplink positioning reference signal.

Exemplarily, the above conditions include at least one of the following conditions:
- The uplink positioning reference signal stored by the terminal has become invalid;
- The uplink positioning reference signal stored by the terminal has become invalid, and the uplink positioning reference signal stored by the terminal has been activated; or
- The uplink positioning reference signal stored by the terminal has become invalid, and the uplink positioning reference signal stored by the terminal is a periodic uplink positioning reference signal.

Optionally, the terminal sends the request message to the LMF network element in at least two ways as follows.

**For the case where the request message is sent to the LMF network element via a network device:**
the terminal sends the request message to the LMF network element via the network device based on an RRC message, such as an RRC resume request message, i.e., the network device transparently transmits the request message sent by the terminal to the LMF network element. In this process, the terminal will send a request message to the network device based on the RRC resume request message. The RRC resume request message carries the UL Information Transfer, and the UL Information Transfer carries the request message. The network device, after receiving the above information sent by the terminal, will send the UL Information Transfer to the LMF network element. Optionally, the UL Information Transfer refers to the Uplink NAS Transport. Optionally, the network device that transparently transmits the request message of the terminal may belong or may not belong to a serving cell of the terminal.

**For the case where the request message is sent directly to the LMF network element via a LPP:**
in the case where the terminal sends the request message directly to the LMF network element, the request message sent by the terminal to the LMF network element is carried in a LPP message.

It should be noted that the terminal can also send the request message to the LMF network element in other ways, and the above implementations are used as examples only and are not to be taken as a limitation of the solutions provided by the embodiments of the present application.

**Step 1104,** the LMF network element requests a network device to configure an uplink positioning reference signal for the terminal.

In the case where the terminal sends the request message to the LMF network element, the LMF network element will respond to the request message and request the network device to configure the uplink positioning reference signal for the terminal. Optionally, the network device belongs to a serving cell of the terminal.

Optionally, the LMF network element requests the network device to configure the uplink positioning reference signal for the terminal via an NRPPa message. The NRPPa message includes at least one of a UE association NRPPa message or a non-UE association NRPPa message.

**Step 1106,** the network device determines an uplink positioning reference signal configuration.

This uplink positioning reference signal configuration is determined by the network device in response to a request from the LMF network element. In the case where the LMF network element requests the network device to configure the uplink positioning reference signal for the terminal, the network device will respond to the request and determine the uplink positioning reference signal configuration for the terminal.

**Step 1108,** the network device sends the uplink positioning reference signal configuration to the LMF network element.

After determining the uplink positioning reference signal configuration for the terminal, the network device will send its determined uplink positioning reference signal configuration to the LMF network element. Optionally, the network device sends its determined uplink positioning reference signal configuration to the LMF network element via an NRPPa message. The NRPPa message includes at least one of a UE association NRPPa message or a non-UE association NRPPa message.

**Step 1110,** the LMF network element sends the uplink positioning reference signal configuration to the terminal.

After receiving the uplink positioning reference signal configuration determined by the network device, the LMF network element will send the uplink positioning reference signal configuration determined by the network device to the terminal, thereby realizing the configuration of the uplink positioning reference signal for the terminal. Optionally, the uplink positioning reference signal configuration sent by the LMF network element to the terminal is carried in a LPP message.

In summary, the method provided in this embodiment, by having the terminal actively request the LMF network element to configure the uplink positioning reference signal, is able to realize that when the terminal releases the stored uplink positioning reference signal configuration, the uplink positioning reference signal is instantaneously configured for the terminal according to the request of the terminal, thereby being able to reduce the delay in configuring the uplink positioning reference signal for the terminal, which in turn reduces the positioning delay and improves the flexibility of configuring the uplink positioning reference signal.

**For the case where the terminal requests the LMF network element to configure an uplink positioning reference signal and the network device sends an uplink positioning reference signal configuration to the terminal:**
FIG. 12 illustrates a flowchart of a method for configuring an uplink positioning reference signal provided by an embodiment of the present application. The method can be applied in the system shown in FIG. 1. The method includes the following steps.

Step 1202, a terminal sends a request message to an LMF network element.

The request message is used to request the LMF network element to configure an uplink positioning reference signal for the terminal. Optionally, the request message further carries a reason for the terminal to request the uplink positioning reference signal. The reason for the terminal to request the uplink positioning reference signal includes at least one of the following:
- An uplink positioning reference signal stored by the terminal has become invalid; or
- Cell reselection occurs at the terminal.

Optionally, the terminal will send the above-described request message to the LMF network element if at least one of the following conditions is satisfied:
- The uplink positioning reference signal stored by the terminal has become invalid;
- The uplink positioning reference signal stored by the terminal has been activated; or
- The uplink positioning reference signal stored by the terminal is a periodic uplink positioning reference signal.

Exemplarily, the above conditions include at least one of the following conditions:
- The uplink positioning reference signal stored by the terminal has become invalid;
- The uplink positioning reference signal stored by the terminal has become invalid, and the uplink positioning reference signal stored by the terminal has been activated; or
- The uplink positioning reference signal stored by the terminal has become invalid, and the uplink positioning reference signal stored by the terminal is a periodic uplink positioning reference signal.

Optionally, the terminal sends the request message to the LMF network element in at least two ways as follows.

**For the case where the request message is sent to the LMF network element via a network device:**
the terminal sends the request message to the LMF network element via the network device based on an RRC message, such as an RRC resume request message, i.e., the network device transparently transmits the request message sent by the terminal to the LMF network element. In this process, the terminal will send a request message to the network device based on the RRC resume request message. The RRC resume request message carries the UL Information Transfer, and the UL Information Transfer carries the request message. The network device, after receiving the above information sent by the terminal, will send the UL Information Transfer to the LMF network element. Optionally, the UL Information Transfer refers to the Uplink NAS Transport. Optionally, the network device that transparently transmits the request message of the terminal may belong or may not belong to a serving cell of the terminal.

**For the case where the request message is sent directly to the LMF network element via a LPP:**
in the case where the terminal sends the request message directly to the LMF network element, the request message sent by the terminal to the LMF network element is carried in a LPP message.

It should be noted that the terminal can also send the request message to the LMF network element in other ways, and the above implementations are used as examples only and are not to be taken as a limitation of the solutions provided by the embodiments of the present application.

**Step 1204,** the LMF network element requests the network device to configure the uplink positioning reference signal for the terminal.

In the case where the terminal sends the request message to the LMF network element, the LMF network element will respond to the request message and request the network device to configure the uplink positioning reference signal for the terminal. Optionally, the network device belongs to a serving cell of the terminal.

Optionally, the LMF network element requests the network device to configure an uplink positioning reference signal for the terminal via an NRPPa message. The NRPPa message includes at least one of a UE association NRPPa message or a non-UE association NRPPa message.

**Step 1206,** the network device determines an uplink positioning reference signal configuration.

This uplink positioning reference signal configuration is determined by the network device in response to a request from the LMF network element. In the case where the LMF network element requests the network device to configure the uplink positioning reference signal for the terminal, the network device will respond to the request and determine the uplink positioning reference signal configuration for the terminal.

**Step 1208,** the network device sends the uplink positioning reference signal configuration to the terminal.

After determining the uplink positioning reference signal configuration for the terminal, the network device will send its determined uplink positioning reference signal configuration directly to the terminal, thereby realizing the configuration of the uplink positioning reference signal for the terminal.

Optionally, the uplink positioning reference signal configuration sent by the network device to the terminal is carried in an RRC message. The RRC message includes at least one of an RRC release message, an RRC reconfiguration message, or an RRC setup message. The network device sends its determined uplink positioning reference signal configuration to the LMF network element via an NRPPa message. The NRPPa message includes at least one of a UE association NRPPa message or a non-UE association NRPPa message.

**Step 1210,** the network device sends the uplink positioning reference signal configuration to the LMF network element.

After determining the uplink positioning reference signal configuration for the terminal, the network device will also send its determined uplink positioning reference signal configuration to the LMF network element, and the LMF network element is able to be informed of the uplink positioning reference signal configured for the terminal based on the uplink positioning reference signal configuration sent by the network device.

In summary, the method provided in this embodiment, by having the terminal actively request the LMF network element to configure the uplink positioning reference signal, is able to realize that when the terminal releases the stored uplink positioning reference signal configuration, the uplink positioning reference signal is instantaneously configured for the terminal according to the request of the terminal, thereby being able to reduce the delay in configuring the uplink positioning reference signal for the terminal, which in turn reduces the positioning delay and improves the flexibility of configuring the uplink positioning reference signal.

It should be noted that the sequence of the method steps provided by the embodiments of this application may be appropriately adjusted, and the steps may be correspondingly added or deleted according to the circumstances. The variations of the method that can be easily conceived by any person skilled in the art within the scope of the technology disclosed in this application, shall be covered by the scope of protection of this application, and therefore will not be further elaborated herein.

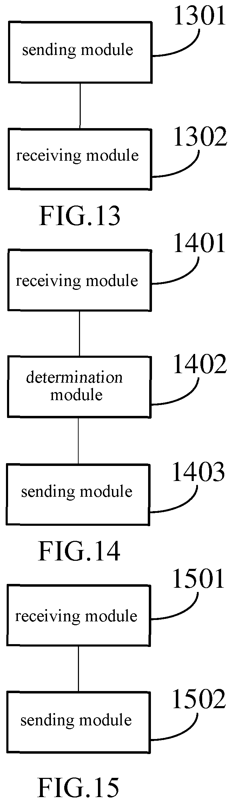

FIG. 13 illustrates a block diagram of a structure of an apparatus for configuring an uplink positioning reference signal provided by an exemplary embodiment of the present application. As shown in FIG. 13, the apparatus includes:
a sending module 1301 configured to send a request message to a network device and/or an LMF network element,
where the request message is used to request the network device and/or the LMF network element to configure an uplink positioning reference signal for the terminal.

In an optional design, the sending module 1301 is configured to:
send the request message to the network device and/or the LMF network element in response to at least one of following conditions being satisfied:
an uplink positioning reference signal stored by the terminal has become invalid,
the uplink positioning reference signal stored by the terminal has been activated, or
the uplink positioning reference signal stored by the terminal is a periodic uplink positioning reference signal.

In an optional design, the request message sent by the terminal to the network device is carried in a RRC resume request message.

In an optional design, the apparatus further includes:
a receiving module 1302 configured to receive an uplink positioning reference signal configuration from the network device,
where the uplink positioning reference signal configuration is determined by the network device in response to the request message from the terminal.

In an optional design, the uplink positioning reference signal configuration sent by the network device to the terminal is carried in a RRC message.

In an optional design, the network device sends the uplink positioning reference signal configuration to the LMF network element.

In an optional design, the uplink positioning reference signal configuration sent by the network device to the LMF network element is carried in a New Radio Positioning Protocol A message.

In an optional design, the sending module 1301 is configured to:
send the request message to the LMF network element via the network device based on a RRC resume request message.

In an optional design, the sending module 1301 is configured to:
send the request message to the network device based on the RRC resume request message,
where the RRC resume request message carries uplink delivery information, the uplink delivery information carrying the request message, and where the network device sends the uplink delivery information to the LMF network element.

In an optional design, the request message sent by the terminal to the LMF network element is carried in a LPP message.

In an optional design, the LMF network element requests the network device to configure the uplink positioning reference signal for the terminal.

In an optional design, the network device sends an uplink positioning reference signal configuration to the terminal,
where the uplink positioning reference signal configuration is determined by the network device in response to the request from the LMF network element.

In an optional design, the network device sends an uplink positioning reference signal configuration to the LMF network element,
where the uplink positioning reference signal configuration is determined by the network device in response to the request from the LMF network element.

In an optional design, the device further comprises:
a receiving module 1302 configured to receive an uplink positioning reference signal configuration sent by the LMF network element,
where the uplink positioning reference signal configuration is determined by the network device in response to the request from the LMF network element.

In an optional design, the uplink positioning reference signal configuration sent by the LMF network element to the terminal is carried in a LPP message.

In an optional design, the request message further carries a reason for the terminal to request the uplink positioning reference signal.

In an optional design, the reason for the terminal to request the uplink positioning reference signal includes at least one of:
an uplink positioning reference signal stored by the terminal has become invalid; or
cell reselection occurs at the terminal.

FIG. 14 illustrates a block diagram of a structure of an apparatus for configuring an uplink positioning reference signal provided by an exemplary embodiment of the present application. As shown in FIG. 14, the apparatus includes:
a receiving module 1401 configured to receive a request message from a terminal;
where the request message is used to request a network device to configure an uplink positioning reference signal for the terminal.

In an optional design, the request message sent by the terminal to the network device is carried in a RRC resume request message.

In an optional design, the apparatus further includes:
a determination module 1402 configured to determine an uplink positioning reference signal configuration; and
a sending module 1403 configured to send the uplink positioning reference signal configuration to the terminal;
where the uplink positioning reference signal configuration is determined by the network device in response to the request message from the terminal.

In an optional design, the uplink positioning reference signal configuration sent by the network device to the terminal is carried in a RRC message.

In an optional design, the apparatus further includes:
a sending module 1403 configured to send the uplink positioning reference signal configuration to an LMF network element.

In an optional design, the uplink positioning reference signal configuration sent by the network device to the LMF network element is carried in a New Radio Positioning Protocol A message.

In an optional design, the receiving module 1401 is configured to:
receive a request from an LMF network element, the request being used to request the network device to configure the uplink positioning reference signal for the terminal;
where the request is sent by the LMF network element when the request message sent by the terminal is received by the LMF network element.

In an optional design, the apparatus further includes:
a determination module 1402 configured to determine an uplink positioning reference signal configuration; and
a sending module 1403 configured to send the uplink positioning reference signal configuration to the terminal;
where the uplink positioning reference signal configuration is determined by the network device in response to the request from the LMF network element.

In an optional design, the apparatus further includes:
a determination module 1402 configured to determine an uplink positioning reference signal configuration; and
a sending module 1403 configured to send the uplink positioning reference signal configuration to the LMF network element;
where the uplink positioning reference signal configuration is determined by the network device in response to the request from the LMF network element.

In an optional design, the LMF network element sends an uplink positioning reference signal configuration to the terminal;
where the uplink positioning reference signal configuration is determined by the network device in response to the request from the LMF network element.

In an optional design, the uplink positioning reference signal configuration sent by the LMF network element to the terminal is carried in a LPP message.

In an optional design, the request message further carries a reason for the terminal to request the uplink positioning reference signal.

In an optional design, the reason for the terminal to request the uplink positioning reference signal includes at least one of:
an uplink positioning reference signal stored by the terminal has become invalid, or
cell reselection occurs at the terminal.

FIG. 15 illustrates a block diagram of a structure of an apparatus for configuring an uplink positioning reference signal provided by an exemplary embodiment of the present application. As shown in FIG. 15, the apparatus includes:
a receiving module 1501 configured to receive a request message from a terminal;
where the request message is used to request an LMF network element to configure an uplink positioning reference signal for the terminal.

In an optional design, the receiving module 1501 is configured to:
receive the request message sent via a network device from the terminal based on a RRC resume request message.

In an optional design, the receiving module 1501 is configured to:
receive the request message sent by the network device based on the RRC resume request message,
where the request message is sent by the terminal to the network device based on the RRC resume request message, the RRC resume request message carries uplink delivery information, and the uplink delivery information carries the request message.

In an optional design, the request message sent by the terminal to the LMF network element is carried in a LPP message.

In an optional design, the apparatus further includes:
a sending module 1502 configured to request the network device to configure the uplink positioning reference signal for the terminal.

In an optional design, the network device sends an uplink positioning reference signal configuration to the terminal; and
the uplink positioning reference signal configuration is determined by the network device in response to the request from the LMF network element.

In an optional design, the receiving module 1501 is configured to:
receive an uplink positioning reference signal configuration from the network device,
where the uplink positioning reference signal configuration is determined by the network device in response to the request from the LMF network element.

In an optional design, the apparatus further includes:
a sending module 1502 configured to send an uplink positioning reference signal configuration to the terminal,
where the uplink positioning reference signal configuration is determined by the network device in response to the request from the LMF network element.

In an optional design, the uplink positioning reference signal configuration sent by the LMF network element to the terminal is carried in a LPP message.

In an optional design, the receiving module 1501 is configured to:
receive an uplink positioning reference signal configuration from a network device,
where the uplink positioning reference signal configuration is determined by the network device in response to the request message sent by the terminal.

In an optional design, the uplink positioning reference signal configuration sent by the network device to the LMF network element is carried in a New Radio Positioning Protocol A message.

In an optional design, the request message further carries a reason for the terminal to request the uplink positioning reference signal.

In an optional design, the reason for the terminal to request the uplink positioning reference signal includes at least one of:
an uplink positioning reference signal stored by the terminal has become invalid, or
cell reselection occurs at the terminal.

It should be noted that the apparatus provided by the above embodiments is only exemplified by the division of the above-described functional modules in realizing its functions, and in actual application, the above-described functions can be assigned to be completed by different functional modules according to actual needs, i.e., the content structure of the apparatus can be divided into different functional modules in order to complete all or part of the above-described functions.

With respect to the apparatus in the above embodiments, the specific manner in which each module performs an operation has been described in detail in the embodiments relating to the method, and will not be described in detail herein.

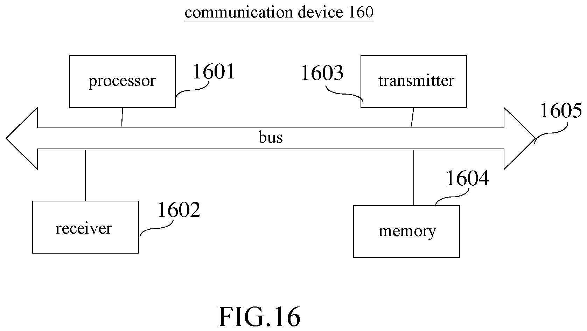

FIG. 16 illustrates a schematic diagram of a structure of a communication device (terminal device or network device) provided by an exemplary embodiment of the present application. The communication device 160 includes a processor 1601, a receiver 1602, a transmitter 1603, a memory 1604, and a bus 1605.

The processor 1601 includes one or more processing cores, and the processor 1601 performs various functional applications as well as information processing by running software programs as well as modules.

The receiver 1602 and the transmitter 1603 may be implemented as a communication component, which may be a communication chip.

The memory 1604 is connected to the processor 1601 via bus 1605.

The memory 1604 may be used to store the at least one instruction, and the processor 1601 is used to execute the at least one instruction to implement the various steps in the method embodiments described above.

In addition, the memory 1604 may be implemented by any type of volatile or non-volatile storage device or combination thereof, volatile or non-volatile storage devices include, but are not limited to: disks or optical disks, electrically Erasable Programmable Read Only Memory (EEPROM), Erasable Programmable Erasable Programmable Read Only Memory (EPROM), Static Random Access Memory (SRAM), Read-Only Memory (ROM), Magnetic Memory, Flash Memory, Programmable Read-Only Memory (PROM).

When the communication device is realized as a terminal, the processor and the transceiver in the communication device involved in the embodiments of the present application may be realized together as a communication chip, or the transceiver may form the communication chip alone. The transmitter in the transceiver performs sending steps performed by the terminal in any one of the methods described above, and the receiver in the transceiver performs receiving steps performed by the terminal in any one of the methods described above, and the processor performs steps other than the sending and receiving steps, which will not be described herein.

When the communication device is realized as a network device (an access network device or a core network device), the processor and the transceiver in the communication device involved in the embodiments of the present application may be realized together as a communication chip, or the transceiver may form the communication chip alone. The transmitter in the transceiver performs the sending steps performed by the network device in any one of the methods described above, the receiver in the transceiver performs the receiving steps performed by the network device in any one of the methods described above, and the processor performs steps other than the sending and receiving steps, which will not be described herein.

In exemplary embodiments, there is also provided a computer-readable storage medium, the computer-readable storage medium having stored therein at least one instruction, at least one segment of a program, a code set, or a set of instructions. The at least one instruction, the at least one segment of a program, the code set or the set of instructions is loaded and executed by the processor to implement the method for configuring the uplink positioning reference signal provided by each of the above method embodiments.

In exemplary embodiments, there is also provided a chip, the chip including a programmable logic circuit and/or a program instruction for implementing the method for configuring the uplink positioning reference signal provided by each of the above method embodiments when the chip is operated on a communication device.

In exemplary embodiments, there is also provided a computer program product that, when run on a processor of a computer device, causes the computer device to perform the method for configuring the uplink positioning reference signal described above.

It will be understood by those skilled in the art that, in one or more of the above examples, the functions described in the embodiments of the present application may be implemented using hardware, software, firmware, or any combination thereof. When implemented using software, the functions may be stored in a computer-readable medium or transmitted as one or more instructions or code on a computer-readable medium. The computer-readable medium includes a computer storage medium and a communication medium, where the communication medium includes any medium that facilitates the transmission of a computer program from one location to another. The storage medium can be any available medium that can be accessed by a general-purpose or special-purpose computer.

The contents described above are only exemplary embodiments of the present application and are not intended to limit the present application, and any modifications, equivalent substitutions, improvements, etc. made within the spirit and principles of the present application shall be included in the scope of protection of the present application.

## Claims

1. A method for configuring an uplink positioning reference signal, performed by a terminal, the method comprising:
sending a request message to a network device and/or a Location Management Function (LMF) network element,
wherein the request message is used to request the network device and/or the LMF network element to configure an uplink positioning reference signal for the terminal.

2. The method according to claim 1, wherein sending the request message to the network device and/or the LMF network element comprises:
sending the request message to the network device and/or the LMF network element in response to at least one of following conditions being satisfied:
an uplink positioning reference signal stored by the terminal has become invalid,
the uplink positioning reference signal stored by the terminal has been activated, or
the uplink positioning reference signal stored by the terminal is a periodic uplink positioning reference signal.

3. The method according to claim 1, wherein the request message sent by the terminal to the network device is carried in a Radio Resource Control (RRC) resume request message.

4. The method according to claim 1, further comprising:
receiving an uplink positioning reference signal configuration from the network device,
wherein the uplink positioning reference signal configuration is determined by the network device in response to the request message from the terminal.

5. The method according to claim 4, wherein the uplink positioning reference signal configuration sent by the network device to the terminal is carried in a Radio Resource Control (RRC) message.

6. The method according to claim 4, wherein the network device sends the uplink positioning reference signal configuration to the LMF network element.

7. The method according to claim 6, wherein the uplink positioning reference signal configuration sent by the network device to the LMF network element is carried in a New Radio Positioning Protocol A message.

8. The method according to claim 1, wherein sending the request message to the LMF network element comprises:
sending the request message to the LMF network element via the network device based on a Radio Resource Control (RRC) resume request message.

9. The method according to claim 8, wherein sending the request message to the LMF network element via the network device based on the RRC resume request message, comprises:
sending the request message to the network device based on the RRC resume request message,
wherein the RRC resume request message carries uplink delivery information, the uplink delivery information carrying the request message, and wherein the network device sends the uplink delivery information to the LMF network element.

10. The method according to claim 1, wherein the request message sent by the terminal to the LMF network element is carried in a Long Term Evolution Positioning Protocol (LPP) message.

11. The method according to claim 8 or 10, wherein the LMF network element requests the network device to configure the uplink positioning reference signal for the terminal.

12. The method according to claim 11, wherein the network device sends an uplink positioning reference signal configuration to the terminal,
wherein the uplink positioning reference signal configuration is determined by the network device in response to the request from the LMF network element.

13. The method according to claim 11, wherein the network device sends an uplink positioning reference signal configuration to the LMF network element,
wherein the uplink positioning reference signal configuration is determined by the network device in response to the request from the LMF network element.

14. The method according to claim 11, further comprising:
receiving an uplink positioning reference signal configuration sent by the LMF network element,
wherein the uplink positioning reference signal configuration is determined by the network device in response to the request from the LMF network element.

15. The method according to claim 14, wherein the uplink positioning reference signal configuration sent by the LMF network element to the terminal is carried in a Long Term Evolution Positioning Protocol (LPP) message.

16. The method according to any one of claims 1 to 15, wherein the request message further carries a reason for the terminal to request the uplink positioning reference signal.

17. The method according to claim 16, wherein the reason for the terminal to request the uplink positioning reference signal comprises at least one of:
an uplink positioning reference signal stored by the terminal has become invalid, or
cell reselection occurs at the terminal.

18. A method for configuring an uplink positioning reference signal, performed by a network device, the method comprising:
receiving a request message from a terminal,
wherein the request message is used to request the network device to configure an uplink positioning reference signal for the terminal.

19. The method according to claim 18, wherein the request message sent by the terminal to the network device is carried in a Radio Resource Control (RRC) resume request message.

20. The method according to claim 18, further comprising:
determining an uplink positioning reference signal configuration; and
sending the uplink positioning reference signal configuration to the terminal,
wherein the uplink positioning reference signal configuration is determined by the network device in response to the request message from the terminal.

21. The method according to claim 20, wherein the uplink positioning reference signal configuration sent by the network device to the terminal is carried in a Radio Resource Control (RRC) message.

22. The method according to claim 20, further comprising:
sending the uplink positioning reference signal configuration to a Location Management Function (LMF) network element.

23. The method according to claim 22, wherein the uplink positioning reference signal configuration sent by the network device to the LMF network element is carried in a New Radio Positioning Protocol A message.

24. The method according to any one of claims 18 to 23, further comprising:
receiving a request from a Location Management Function (LMF) network element, the request being used to request the network device to configure the uplink positioning reference signal for the terminal,
wherein the request is sent by the LMF network element when the request message sent by the terminal is received by the LMF network element.

25. The method according to claim 24, further comprising:
determining an uplink positioning reference signal configuration; and
sending the uplink positioning reference signal configuration to the terminal,
wherein the uplink positioning reference signal configuration is determined by the network device in response to the request from the LMF network element.

26. The method according to claim 24, further comprising:
determining an uplink positioning reference signal configuration; and
sending the uplink positioning reference signal configuration to the LMF network element,
wherein the uplink positioning reference signal configuration is determined by the network device in response to the request from the LMF network element.

27. The method according to claim 24, wherein the LMF network element sends an uplink positioning reference signal configuration to the terminal; and
wherein the uplink positioning reference signal configuration is determined by the network device in response to the request from the LMF network element.

28. The method according to claim 27, wherein the uplink positioning reference signal configuration sent by the LMF network element to the terminal is carried in a Long Term Evolution Positioning Protocol (LPP) message.

29. The method according to any one of claims 18 to 28, wherein the request message further carries a reason for the terminal to request the uplink positioning reference signal.

30. The method according to claim 29, wherein the reason for the terminal to request the uplink positioning reference signal comprises at least one of:
an uplink positioning reference signal stored by the terminal has become invalid, or
cell reselection occurs at the terminal.

31. A method for configuring an uplink positioning reference signal, performed by a Location Management Function (LMF) network element, the method comprising:
receiving a request message from a terminal,
wherein the request message is used to request the LMF network element to configure an uplink positioning reference signal for the terminal.

32. The method according to claim 31, wherein receiving the request message from the terminal comprises:
receiving the request message sent via a network device from the terminal based on a radio resource control (RRC) resume request message.

33. The method according to claim 32, wherein receiving the request message sent via the network device from the terminal based on the RRC resume request message, comprises:
receiving the request message sent by the network device based on the RRC resume request message,
wherein the request message is sent by the terminal to the network device based on the RRC resume request message, the RRC resume request message carries uplink delivery information, and the uplink delivery information carries the request message.

34. The method according to claim 30, wherein the request message sent by the terminal to the LMF network element is carried in a Long Term Evolution Positioning Protocol (LPP) message.

35. The method according to claim 32 or 34, further comprising:
requesting the network device to configure the uplink positioning reference signal for the terminal.

36. The method according to claim 35, wherein the network device sends an uplink positioning reference signal configuration to the terminal; and
wherein the uplink positioning reference signal configuration is determined by the network device in response to the request from the LMF network element.

37. The method according to claim 35, further comprising:
receiving an uplink positioning reference signal configuration from the network device,
wherein the uplink positioning reference signal configuration is determined by the network device in response to the request from the LMF network element.

38. The method according to claim 35, further comprising:
sending an uplink positioning reference signal configuration to the terminal,
wherein the uplink positioning reference signal configuration is determined by the network device in response to the request from the LMF network element.

39. The method according to claim 38, wherein the uplink positioning reference signal configuration sent by the LMF network element to the terminal is carried in a Long Term Evolution Positioning Protocol (LPP) message.

40. The method according to any one of claims 31 to 39, further comprising:
receiving an uplink positioning reference signal configuration from a network device, wherein the uplink positioning reference signal configuration is determined by the network device in response to the request message sent by the terminal.

41. The method according to claim 40, wherein the uplink positioning reference signal configuration sent by the network device to the LMF network element is carried in a New Radio Positioning Protocol A message.

42. The method according to any one of claims 31 to 41, wherein the request message further carries a reason for the terminal to request the uplink positioning reference signal.

43. The method according to claim 42, wherein the reason for the terminal to request the uplink positioning reference signal comprises at least one of:
an uplink positioning reference signal stored by the terminal has become invalid, or
cell reselection occurs at the terminal.

44. An apparatus for configuring an uplink positioning reference signal, comprising:
a sending module configured to send a request message to a network device and/or a Location Management Function (LMF) network element,
wherein the request message is used to request the network device and/or the LMF network element to configure an uplink positioning reference signal for the terminal.

45. An apparatus for configuring an uplink positioning reference signal, comprising:
a receiving module configured to receive a request message from a terminal,
wherein the request message is used to request a network device to configure an uplink positioning reference signal for the terminal.

46. An apparatus for configuring an uplink positioning reference signal, comprising:
a receiving module configured to receive a request message from a terminal,
wherein the request message is used to request a Location Management Function (LMF) network element to configure an uplink positioning reference signal for the terminal.

47. A terminal, comprising:
a processor;
a transceiver connected to the processor; and
a memory for storing instructions executable by the processor;
wherein the processor is configured to load and execute the instructions to implement the method for configuring the uplink positioning reference signal according to any one of claims 1 to 17.

48. A network device, comprising:
a processor;
a transceiver connected to the processor; and
a memory for storing instructions executable by the processor;
wherein the processor is configured to load and execute the instructions to implement the method for configuring the uplink positioning reference signal according to any one of claims 18 to 30.

49. A network device, comprising:
a processor;
a transceiver connected to the processor; and
a memory for storing instructions executable by the processor;
wherein the processor is configured to load and execute the instructions to implement the method for configuring the uplink positioning reference signal according to any one of claims 31 to 43.

50. A computer-readable storage medium, storing executable instructions which, when loaded and executed by a processor, cause the processor to implement the method for configuring the uplink positioning reference signal according to any one of claims 1 to 43.

51. A chip, comprising a programmable logic circuit or program, wherein the chip is configured to implement the method for configuring the uplink positioning reference signal according to any one of claims 1 to 43.
